# EUROPEAN PATENT APPLICATION

(11) **EP 3 388 499 A1**
(43) Date of publication of application: **17.10.2018**
(21) Application number: 18163541.8
(22) Date of filing: 23.03.2018
(51) Int. Cl.: C10G 65/08, C10G 65/12

(54) **A PROCESS FOR PREPARING DE-AROMATIZED HYDROCARBON SOLVENTS**

(30) Priority: 11.04.2017 IN 201721012894
(71) Applicant: Hindustan Petroleum Corporation Ltd., Churchgate, Mumbai 400 020 (IN)
(72) Inventor: DHAR, Pradyut Kumar, 560067 Bengaluru (IN); GNANASEKARAN, Valavarasu, 560067 Bengaluru (IN); CHELLIAHN, Bennet, 560067 Bengaluru (IN); RAO, Peddy, Venkata Chalapathi, 560067 Bengaluru (IN); GANDHAM, Sri Ganesh, 560067 Bengaluru (IN)
(74) Representative: AWA Denmark A/S

(57) **Abstract**

The present disclosure relates to a process to obtain de-aromatized hydrocarbon solvents from a heavy hydrocarbon stream. The process comprises hydrotreatment and selective hydrogenation of a heavy hydrocarbon stream at optimized process conditions. De-aromatized hydrocarbon solvents are characterized by aromatic content of less than 100 ppm, and sulphur content of less than 10 ppm.

The de-aromatized hydrocarbon solvents thus obtained is suitable for use in applications such as printing inks, paint, coatings, metal working fluids, industrial and institutional cleaning, adhesives, sealants, and in drilling fluids.

## Description

### FIELD

The present disclosure relates to de-aromatized hydrocarbon solvents.

### DEFINITIONS

As used in the present disclosure, the following terms are generally intended to have the meaning as set forth below, except to the extent that the context in which they are used indicate otherwise.

**De-aromatized hydrocarbon solvents:** De-aromatized hydrocarbon solvents are hydrocarbon solvents having less than 100 ppm of aromatic content.

**Lube Base Oil:** Lube base oil is a hydrocarbon fraction produced by the distillation of vacuum long residue. There are different types of the lube base oil, such as 150SN, 200SN, and 500SN, wherein SN denotes solvent neutral.

**Hydrogen (H₂)/hydrocarbon ratio:** H₂/hydrocarbon ratio is defined as the ratio of total gas to the reactor and total feed to the reactor and is expressed in Nm³/m³ units.

**Saybolt colour:** Saybolt colour is used for grading light coloured petroleum products including aviation fuels, kerosene, naphtha, white mineral oils, hydrocarbon solvents and petroleum waxes.

**Simulated distillation:** Simulated distillation is a gas chromatographic method used to characterize petroleum fractions and products in terms of their boiling range distribution. Results are reported as a correlation between the boiling points and the percentages of the petroleum fractions eluted from the column.

**ASTM D86:** ASTM D86 is a test method used to determine quantitatively the boiling range characteristics of products such as light and middle distillates obtained from atmospheric distillation of petroleum products.

**WABT:** Weight average bed temperature (WABT) represents the average value of inlet temperature and outlet temperature of the reactor.

### BACKGROUND

Dearomatized hydrocarbon solvents are useful in numerous applications such as production of adhesives, aerosols, cleansing agents, detergents, cleaning metal articles. The processes for obtaining de-aromatized hydrocarbon solvents involve conversion of the aromatic compounds present in hydrocarbon feed to the corresponding saturated hydrocarbons by reacting the aromatic compounds with hydrogen in the presence of a suitable catalyst under appropriate process conditions. Further, the hydrogenated petroleum distillates obtained from the hydrogenation reaction are usually stabilized by the removal of the light, volatile hydrocarbon components.

In order to produce high valued de-aromatized hydrocarbon solvents, selection of suitable hydrocarbon feedstock is important. Further, competitive and highly efficient processes for hydrogenation reaction of the hydrocarbon stream are critical to produce these high value products meeting the existing and future market demand.

Conventionally de-aromatized solvents are prepared from expensive hydrocarbon feedstock and the processes used for this purpose requires harsh hydrogenation reaction conditions.

The art continues to develop processes for reaction of niche hydrocarbon feedstock with hydrogen to produce de-aromatized hydrocarbon solvents in efficient and cost effective manner.

Therefore, there is felt a need to provide a simple process for hydrogenation of an inexpensive hydrocarbon feedstock to obtain de-aromatized hydrocarbon solvents having low sulfur content, and low aromatics content.

### OBJECTS

Some of the objects of the present disclosure, which at least one embodiment herein satisfies, are as follows:
It is an object of the present disclosure to ameliorate one or more problems of the prior art or to at least provide a useful alternative.

An object of the present disclosure is to provide a process to obtain de-aromatized hydrocarbon solvents from an inexpensive heavy hydrocarbon feedstock.

Another object of the present disclosure is to provide a simple hydrogenation process to obtain de-aromatized hydrocarbon solvents.

Yet another object of the present disclosure is to provide de-aromatized hydrocarbon solvents with low aromatic content.

Other objects and advantages of the present disclosure will be more apparent from the following description, which is not intended to limit the scope of the present disclosure.

### SUMMARY

The present disclosure provides a process for preparing de-aromatized hydrocarbon solvents from heavy hydrocarbon stream. The process comprises the following steps. Distilling the heavy hydrocarbon stream to obtain a first distillate having boiling point in the range of 180°C to 550°C. Further, the first distillate is hydrotreated in the presence of a hydrotreating catalyst in a hydrotreatment reactor to obtain light distillates; followed by fractionation of the light distillates to obtain a second distillate having boiling point in the range of 150°C to 350°C. The second distillate is subjected to selective hydrogenation in the presence of a hydrogenating catalyst in a hydrogenation reactor operating at selective hydrogenation conditions to obtain the de-aromatized hydrocarbon solvents.

The selective hydrogenation process of the present disclosure is carried out at a temperature in the range of 160°C to 260°C, pressure in the range of 10 bar to 60 bar, weight hourly space velocity (WHSV) in the range of 0.5 h⁻¹ to 3.0 h¹, and volume ratio of hydrogen to second distillate in the range of 5 Nm³/m³ to 100 Nm³/m³.

The de-aromatized hydrocarbon solvents of the present disclosure is characterized by aromatic content in the range of 5 ppm to 100 ppm, and sulfur content in the range of 0.5 ppm to 10 ppm.

The aromatic content and sulfur content of the light distillates is in the range of 5000 ppm to 20,000 ppm, and 5 ppm to 100 ppm. The aromatic content and sulfur content of the heavy hydrocarbon stream is in the range of 10,000 ppm to 300,000 ppm, and 10,000 ppm to 25,000 ppm respectively.

The heavy hydrocarbon stream of the present disclosure is at least one selected from the group comprising straight run kerosene, straight run gas oil, heavy vacuum gas oil, and lube base oil. The lube base oil of the present disclosure is at least one selected from the group comprising 150SN, 200SN, 500SN, and spindle oil.

The hydrotreating catalyst of the present disclosure is at least one selected from cobalt molybdenum, and nickel molybdenum, the hydrotreating catalyst is impregnated on a support selected from the group comprising alumina, silica, titania, and zirconia. The hydrogenation catalyst is at least one selected from nickel, platinum, palladium, rhenium, rhodium, nickel tungstate, molybdenum, cobalt molybdenate, and nickel molybdenate, the hydrotreating catalyst is impregnated on a support selected from the group comprising alumina, silica, titania, and zirconia.

The hydrotreatment process of the present disclosure is carried out at a reactor temperature ranging from 300°C to 450°C, reactor pressure ranging from 60 bar to 180 bar, weight hourly space velocity (WHSV) ranging from 0.5 h⁻¹ to 3.0 h⁻¹, and volume ratio of hydrogen to heavy hydrocarbon stream ranging from 100 Nm³/m³ to 1500 Nm³/m³.

The de-aromatized hydrocarbon solvents comprise paraffins, iso-paraffins, and naphthenic components.

### DETAILED DESCRIPTION

Conventionally de-aromatized solvents are prepared from expensive hydrocarbon feedstock, and the processes used for this purpose requires harsh hydrogenation reaction conditions. The present disclosure provides a simple and economical process to obtain de-aromatized hydrocarbon.

In accordance with the present disclosure, there is provided a process for preparing de-aromatized hydrocarbon solvents from a heavy hydrocarbon stream.

The process of the present disclosure comprises the following steps:
A heavy hydrocarbon stream is distilled in a distillation column to obtain a first distillate having boiling point in the range of 180°C to 550°C.

The first distillate is hydrotreated in the presence of a hydrotreating catalyst in a hydrotreatment reactor to obtain light distillates.

The light distillates are fractionated obtain a second distillate having boiling point in the range of 150°C to 350°C.

The second distillate is subjected to selective hydrogenation in the presence of a hydrogenating catalyst in a hydrogenation reactor operated at selective hydrogenation conditions to obtain the de-aromatized hydrocarbon solvents.

In accordance with the embodiments of the present disclosure, the selective hydrogenation is carried out at a temperature in the range of 160°C to 260°C, pressure in the range of 10 bar to 60 bar, weight hourly space velocity (WHSV) in the range of 0.5 h⁻¹ to 3.0 h¹, and volume ratio of hydrogen to second distillate in the range of 5 Nm³/m³ to 100 Nm³/m³.

In accordance with preferred embodiments of the present disclosure, the selective hydrogenation is carried out at temperature in the range of 180°C to 220°C, pressure in the range of 30 bar to 45 bar, WHSV in the range of 1.0 h⁻¹ to 2.0 h¹, and volume ratio of hydrogen to second distillate in the range of 10 Nm³/m³ to 50 Nm³/m³.

In accordance with the embodiments of the present disclosure, the de-aromatized hydrocarbon solvents of the present disclosure are characterized by aromatic content in the range of 5 ppm to 100 ppm.

In accordance with the preferred embodiments of the present disclosure, the de-aromatized hydrocarbon solvents of the present disclosure are characterized by aromatic content in the range of 10 ppm to 80 ppm.

In accordance with the embodiments of the present disclosure, the de-aromatized hydrocarbon solvents of the present disclosure are characterized by sulfur content in the range of 0.5 ppm to 10 ppm.

In accordance with the preferred embodiments of the present disclosure, the de-aromatized hydrocarbon solvents of the present disclosure are characterized sulfur content in the range of 1 ppm to 5 ppm.

The heavy hydrocarbon stream is at least one selected from the group comprising straight run kerosene, straight run gas oil, heavy vacuum gas oil, and lube base oil. The lube base oil is at least one selected from the group comprising 150SN, 200SN, 500SN, and spindle oil.

In accordance with an exemplary embodiment of the present disclosure, the heavy hydrocarbon stream is lube base oil. In one embodiment, the lube base oil is 150SN. In another embodiment, the lube base oil is 500SN. In yet another embodiment, the lube base oil is a mixture of 150SN and 500SN.

In accordance with the embodiments of the present disclosure, the aromatic content of the heavy hydrocarbon stream is in the range of 10,000 ppm to 300,000 ppm. In a preferred embodiment, the aromatic content of the heavy hydrocarbon stream is in the range of 200,000 ppm to 250,000 ppm.

In accordance with the embodiments of the present disclosure, the sulfur content of the heavy hydrocarbon stream is in the range of 10,000 ppm to 25,000 ppm respectively. In a preferred embodiment, the sulfur content of the heavy hydrocarbon stream is in the range of 18,000 ppm to 20,000 ppm respectively.

The hydrotreating catalyst of the present disclosure is at least one selected from cobalt molybdenum, and nickel molybdenum. The hydrotreating catalyst is impregnated on at least one support selected from the group comprising alumina, silica, titania, and zirconia. In a preferred embodiment, the catalyst is cobalt molybdenum impregnated on alumina support.

The hydrogenation catalyst of the present disclosure is at least one selected from nickel, platinum, palladium, rhenium, rhodium, nickel tungstate, molybdenum, cobalt molybdenate, and nickel molybdenate. The hydrogenation catalyst is impregnated on a support selected from the group comprising alumina, silica, titania, and zirconia. In a preferred embodiment, the catalyst is nickel molybdenate impregnated on alumina support.

The hydrotreatment process of the present disclosure is carried out at reactor temperature ranging from 300°C to 450°C, reactor pressure ranging from 60 bar to 180 bar, weight hourly space velocity (WHSV) ranging from 0.5 h⁻¹ to 3.0 h⁻¹, and volume ratio of hydrogen to heavy hydrocarbon stream ranging from 100 Nm³/m³ to 1500 Nm³/m³.

In accordance with an exemplary embodiment of the present disclosure, the hydrotreatment is carried out at reactor temperature of 350°C, reactor pressure of 100 bar, WHSV of 1.5 h⁻¹, and H₂/heavy hydrocarbon stream of 800 Nm³/m³.

In accordance with the embodiments of the present disclosure, the aromatic content of the light distillates is in the range of 5000 ppm to 20,000 ppm. In a preferred embodiment, the aromatic content of the light distillates is in the range of 7000 ppm to 11,495 ppm.

In accordance with the embodiments of the present disclosure, the sulfur content of the heavy hydrocarbon stream is in the range of 5 ppm to 100 ppm. In a preferred embodiment, the sulfur content of the heavy hydrocarbon stream is in the range of 7.5 ppm to 12 ppm.

The de-aromatized hydrocarbon solvents comprise paraffins, iso-paraffins, and naphthenic components.

The selective hydrogenation process of the present disclosure is carried out at lower reactor pressure, and lower H₂/hydrocarbon ratio. These optimized process parameters reduce the energy costs of the process.

The de-aromatized hydrocarbon solvents obtained from the process of the present disclosure possess low aromatic content, which makes them suitable for use in applications such as printing inks, paint, coatings, metal working fluids, industrial and institutional cleaning, adhesives, sealants, and in drilling fluids.

The present disclosure is further illustrated herein below with the help of the following experiments. The experiments used herein are intended merely to facilitate an understanding of the ways in which the embodiments herein may be practiced and to further enable those of skill in the art to practice the embodiments herein. Accordingly, the experiments should not be construed as limiting the scope of embodiments herein. These laboratory scale experiments can be scaled up to industrial/commercial scale and the results obtained can be extrapolated to industrial/commercial scale.

### Experiments:

### Experiments 1 to 4:

Lube base oil 500SN having aromatic content of 250,000 ppm, and sulfur content of 20,000 ppm was distilled to obtain a first distillate having boiling point in the range of 180°C to 550°C. The first distillate was hydrotreated at a temperature of 350°C, pressure of 140 bar, WHSV of 1.5 h-1, and H₂/heavy hydrocarbon stream of 800 Nm³/m³ to obtain light distillates having aromatics content of 7000 ppm, and sulfur content of 12 ppm. The light distillates were further fractionated to obtain a second distillate having boiling point in the range of 150°C to 350°C.

The second light distillate obtained after hydrotreatment were subjected to selective hydrogenation at temperature in the range of 180°C to 220°C, pressure of 30 bar, WHSV of 1.0 h⁻¹, and H₂/second distillate of 10 Nm³/m³ in the presence of nickel molybdenum impregnated on alumina support to obtain de-aromatized hydrocarbon solvents. Experimental details are mentioned below:
**Experiment 1** was carried out at a temperature of 180°C.
**Experiment 2** was carried out at a temperature of 190°C.
**Experiment 3** was carried out at a temperature of 200°C.
**Experiment 4** was carried out at a temperature of 220°C.

The aromatic content and sulfur content of the de-aromatized hydrocarbon solvents obtained after selective hydrogenation is mentioned in Table 1 below.

**Table 1: Aromatic content and sulfur content of lube base oil 500SN**

| **Expt. No.** | | | **1** | **2** | **3** | **4** |
|---|---|---|---|---|---|---|
| **Properties** | Heavy hydrocarbon stream | After hydrotreatment | After selective hydrogenation | | | |
| | | | @ 180°C | @ 190°C | @ 200°C | @ 220°C |
| **Density, gm/cc** | 0.868 | 0.812 | 0.814 | 0.814 | 0.8117 | 0.8116 |
| **Aromatic content, ppm** | 250,000 | 7000 | 47 | 29 | 80 | 45 |
| **Sulfur content, ppm** | 20,000 | 12 | 1.98 | 1.23 | 5 | 1.35 |

From Table 1, it is inferred that the aromatic content of the de-aromatized hydrocarbon solvents obtained after selective hydrogenation was less than 100 ppm.

### Experiments 5 and 6:

Lube base oil 150SN having aromatic content of 200,000 ppm, and sulfur content of 18,000 ppm was distilled to obtain a first distillate having boiling point in the range of 180°C to 550°C. The first distillate was hydrotreated at a temperature of 350°C, pressure of 140 bar, WHSV of 1.5 h-1, and H₂/heavy hydrocarbon stream of 800 Nm³/m³ to obtain light distillates having aromatics content of 11,495 ppm, and sulfur content of 7.5 ppm. The light distillates were further fractionated to obtain a second distillate.

The second distillate obtained after hydrotreatment were subjected to selective hydrogenation at temperature in the range of 180°C to 220°C, pressure of 45 bar, WHSV of 2.0 h⁻¹, and H₂/second distillate of 50 Nm³/m³ in the presence of nickel molybdenum impregnated on alumina support to obtain de-aromatized hydrocarbon solvents. Experimental details are mentioned below:
**Experiment 5** was carried out at a temperature of 180°C.
**Experiment 6** was carried out at a temperature of 220°C.

The aromatic content and sulfur content of the de-aromatized hydrocarbon solvents obtained after selective hydrogenation is mentioned in Table 2 below.

**Table 2: Aromatic content and sulfur content of lube base oil 150SN**

| Expt. No. | | | **5** | **6** |
|---|---|---|---|---|
| Properties | Heavy hydrocarbon stream | After hydrotreatmenl | After selective hydrogenation | |
| | | | @ 180°C | @ 220°C |
| **Density, gm/cc** | 0.859 | 0.815 | 0.817 | 0.817 |
| **Aromatic content, ppm** | 200,000 | 11495 | 21 | 10 |
| **Sulfur content, ppm** | 18,000 | 7.5 | 6 | 1.62 |

From Table 2, it is inferred that, the de-aromatized hydrocarbon solvents obtained after selective hydrogenation was less than 50 ppm.

### Experiment 7 and 8:

A mixture of lube base oil 150SN and lube base oil 500SN was distilled to obtain a first distillate having boiling point in the range of 180°C to 550°C. The first distillate was hydrotreated at a temperature of 350°C, pressure of 140 bar, WHSV of 1.5 h-1, and H₂/heavy hydrocarbon stream of 800 Nm³/m³ to obtain light distillates. The light distillates were further fractionated to obtain second distillate.

The second distillate obtained after hydrotreatment were subjected to selective hydrogenation at temperature of 200°C, pressure of 30 bar, WHSV of 1.0 h⁻¹, and H₂/second distillate of 20 Nm³/m³ in the presence of nickel molybdenum impregnated on alumina support to obtain de-aromatized hydrocarbon solvents (solvent 1 and solvent 2). Experimental details are mentioned below:
**Experiment 7:** de-aromatized hydrocarbon solvent 1
**Experiment 8:** de-aromatized hydrocarbon solvent 2

The properties of the de-aromatized hydrocarbon solvents obtained after selective hydrogenation is mentioned in Table 3 below.

**Table 3: Properties of mixture of lube base oil 500SN and 150SN**

| **Properties** | **Expt. 7** | **Expt. 8** |
|---|---|---|
| **Density @ 15°C average, gm/cc** | 816.4 | 817.6 |
| **Saybolt colour min.** | >30 | >30 |
| **IBP (Initial boiling point), °C, min** | 237.5 | 278.4 |
| **FBP (Final boiling point), °C, max** | 270.3 | 308.4 |
| **Kinematic viscosity@40,°C, cst** | 2.51 | 4.55 |
| **Flash point, °C, min** | 96.5 | 135.6 |
| **Aromatic content, ppm** | 11 | 19 |
| **Sulfur content, ppm** | 4 | 8 |
| **Aniline point, average, °C** | 80.6 | 70.6 |
| **Pour point, °C max** | -54 | -48 |

From Table 3, it is inferred that, the saybolt colour of the de-aromatized hydrocarbon solvents is greater than 30. De-aromatized hydrocarbon solvents having saybolt colour greater than 30 is required for numerous applications, such as fluids for crop protection and pharmacological uses. Further, the aromatic content of the de-aromatized hydrocarbon solvents obtained after selective hydrogenation was less than 20 ppm.

### Experiment 9: Properties of the lube base oils

Properties of the lube base oils were obtained by simulated distillation method. The properties of the hydrotreated stream, and the de-aromatized hydrocarbon solvents were obtained by ASTM D86. Table 4 below provides the boiling ranges of the lube base oil, hydrotreated stream, and de-aromatized hydrocarbon solvents.

**Table 4: Properties of lube base oil, hydrotreated and fractionated stream, and de-aromatized hydrocarbon solvents**

| | **Lube base oil (Simulated Distillation)** | | **Hydrotreated and fractionated stream (ASTM D86)** | | **De-aromatized hydrocarbon solvents of 500SN (ASTM D86)** | |
|---|---|---|---|---|---|---|
| **Properties** | **150SN** | **500SN** | **150SN** | **500SN** | **WABT: 180°C** | **WABT: 190°C** |
| IBP (Initial boiling point), °C | 81 | 81 | 131.2 | 144.4 | 137.2 | 137 |
| 5 wt.%, °C | 320 | 324 | 166 | 175 | 174.3 | 172.2 |
| 10 wt.%, °C | 349 | 381 | 191 | 191.2 | 200.2 | 200 |
| 20 wt.%, °C | 381 | 437 | 213 | 215.3 | 233.2 | 233.2 |
| 30 wt.%, °C | 395 | 458 | 230 | 242 | 252 | 252.2 |
| 40 wt.%, °C | 405 | 470 | 256 | 263.2 | 266 | 267 |
| 50 wt.%, °C | 414 | 482 | 274.1 | 280 | 277.1 | 277.4 |
| 60 wt.%, °C | 423 | 493 | 288.2 | 295 | 287 | 287.4 |
| 70 wt.%, °C | 435 | 504 | 299 | 308.1 | 296.4 | 298 |
| 80 wt.%, °C | 447 | 515 | 309 | 321 | 307 | 308.3 |
| 90 wt.%, °C | 461 | 531 | 317.4 | 335 | 321 | 322.3 |
| 95 wt.%, °C | 475 | 541 | 322 | 343 | 330 | 331.9 |
| 99.5 wt.%, °C | 506 | 565 | 326 | 348 | 331.4 | 332.1 |
| FBP (Final boiling point), °C | NA | NA | 326 | 348 | 332 | 331.4 |

### WABT: Weight average bed temperature

From Table 4, it is inferred that, the boiling point of the lube base oil (150 SN and 500 SN) is in the range of 320 °C to 560 °C, the boiling point of the lube base oil (150 SN and 500 SN) after hydrotreatment is in the range of 166.0 °C to 348.0 °C, and the boiling point of the lube base oil 500SN after hydrogenation is in the range of 170 °C to 332 °C.

### TECHNICAL ADVANCEMENTS

The present disclosure described herein above has several technical advantages including, but not limited to, the realization of:
- de-aromatized hydrocarbon solvents with low aromatic content.
- a simple and cost-effective process for preparing de-aromatized hydrocarbon solvents; and
- low pressure and low H₂/hydrocarbon ratio for preparing de-aromatized hydrocarbon solvents.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

The use of the expression "at least" or "at least one" suggests the use of one or more elements or ingredients or quantities, as the use may be in the embodiment of the invention to achieve one or more of the desired objects or results. While certain embodiments of the inventions have been described, these embodiments have been presented by way of experiments only, and are not intended to limit the scope of the inventions. Variations or modifications to the formulation of this invention, within the scope of the invention, may occur to those skilled in the art upon reviewing the disclosure herein. Such variations or modifications are well within the spirit of this invention.

The numerical values given for various physical parameters, dimensions and quantities are only approximate values and it is envisaged that the values higher than the numerical value assigned to the physical parameters, dimensions and quantities fall within the scope of the invention unless there is a statement in the specification to the contrary.

While considerable emphasis has been placed herein on the specific features of the preferred embodiment, it will be appreciated that many additional features can be added and that many changes can be made in the preferred embodiment without departing from the principles of the disclosure. These and other changes in the preferred embodiment of the disclosure will be apparent to those skilled in the art from the disclosure herein, whereby it is to be distinctly understood that the foregoing descriptive matter is to be interpreted merely as illustrative of the disclosure and not as a limitation.

## Claims

1. A process for preparing de-aromatized hydrocarbon solvents from a heavy hydrocarbon stream, said process comprising the steps of
i. distilling said heavy hydrocarbon stream to obtain a first distillate having boiling point in the range of 180°C to 550°C;
ii. hydrotreating the first distillate in the presence of a hydrotreating catalyst to obtain light distillates;
iii. fractionating said light distillate to obtain a second distillate having boiling point in the range of 150°C to 350°C; and
iv. subjecting said second light distillate to selective hydrogenation in the presence of a hydrogenating catalyst in a hydrogenation reactor operating at selective hydrogenation conditions to obtain said de-aromatized hydrocarbon solvents;
wherein, said de-aromatized hydrocarbon solvents are **characterized by** aromatic content ranging from 5 ppm to 100 ppm; and sulfur content ranging from 0.5 ppm to 10 ppm; and
said selective hydrogenation conditions include reactor temperature ranging from 160°C to 260°C, reactor pressure ranging from 10 bar to 60 bar, weight hourly space velocity (WHSV) ranging from 0.5 h⁻¹ to 3.0 h¹, and volume ratio of hydrogen to second distillate ranging from 5 Nm³/m³ to 100 Nm³/m³.

2. The process as claimed in claim 1, wherein said heavy hydrocarbon stream is at least one selected from the group comprising straight run kerosene, straight run gas oil, heavy vacuum gas oil, and lube base oil.

3. The process as claimed in claim 2, wherein said lube base oil is at least one selected from the group comprising 150SN, 200SN, 500SN, and spindle oil.

4. The process as claimed in claim 1, said heavy hydrocarbon stream is **characterized by** aromatic content ranging from 10,000 ppm to 300,000 ppm, and sulfur content ranging from 10,000 ppm to 25,000 ppm.

5. The process as claimed in claim 1, wherein said hydrotreating catalyst is at least one selected from cobalt molybdenum, and nickel molybdenum, said hydrotreating catalyst is impregnated on at least one support selected from the group comprising alumina, silica, titania, and zirconia.

6. The process as claimed in claim 1, wherein said hydrotreating is carried out at reactor temperature ranging from 300°C to 450°C, reactor pressure ranging from 60 bar to 180 bar, weight hourly space velocity (WHSV) ranging from 0.5 h⁻¹ to 3.0 h⁻¹, and volume ratio of hydrogen to heavy hydrocarbon stream ranging from 100 Nm³/m³to 1500 Nm³/m³.

7. The process as claimed in claim 1, wherein said light distillates are **characterized by** aromatic content ranging from 5000 ppm to 20,000 ppm; and sulfur content ranging from 5 ppm to 100 ppm.

8. The process as claimed in claim 1, wherein said hydrogenation catalyst is at least one selected from nickel, platinum, palladium, rhenium, rhodium, nickel tungstate, molybdenum, cobalt molybdenate, and nickel molybdenate, said hydrogenation catalyst is impregnated on at least one support, selected from the group comprising alumina, silica, titania, and zirconia.

9. The process as claimed in claim 1, wherein said de-aromatized hydrocarbon solvents comprises paraffins, iso-paraffins, and naphthenic components.
